Europäisches Patentamt

European Patent Office

Office européen des brevets

(11) Publication number: **0 481 307 A2**

# EUROPEAN PATENT APPLICATION

(21) Application number: **91116975.3**

(22) Date of filing: **04.10.91**

(51) Int. Cl.5: **G01S 5/14**, G01C 15/00

(30) Priority: **15.10.90 JP 275654/90**
**15.10.90 JP 275655/90**
**18.10.90 JP 280043/90**

(43) Date of publication of application:
**22.04.92 Bulletin 92/17**

(84) Designated Contracting States:
**CH DE FR GB LI**

(71) Applicant: **ASAHI SEIMITSU KABUSHIKI KAISHA**
**No. 5-2, Higashi Ooizumi 2-chome**
**Nerima-ku Tokyo-to(JP)**

(72) Inventor: **Kojima, Yoichi**
**No. 5-2 Higashi Ooizumi, 2-chome**
**Nerima-ku, Tokyo-to(JP)**
Inventor: **Nakamura, Kenichi**
**No. 5-2 Higashi Ooizumi, 2-chome**
**Nerima-ku, Tokyo-to(JP)**

(74) Representative: **Glawe, Delfs, Moll & Partner**
**Patentanwälte**
**Liebherrstrasse 20**
**W-8000 München 26(DE)**

(54) Surveying method utilizing global positioning system and surveying equipment used to perform this method.

(57) The present invention relates to a surveying method utilizing a GPS comprising steps of positioning an unknown GPS traverse station (TG) by said GPS with one GPS receiving means provided at a known reference station (B) and the other GPS receiving means provided together with a surveying equipment such as a total station at said unknown GPS traverse station (TG), both of these stations (TG, B) being to be interferometrically measured utilizing said GPS; and surveying unknown stations (H1, H2, H3) surrounding the GPS traverse (TG) station, with a target such as a prism being provided at a known reference direction station (B) which can be clearly viewed from said surveying equipment provided at said GPS traverse station (TG). The invention relates also to a surveying equipment comprising one GPS receiving means provided at a known reference station (B) and the other GPS receiving means associated with an unknown traverse station (TG), said other GPS receiving means being incorporated in the surveying equipment such as a total station and both of these stations being to be interferometrically measured utilizing the GPS.

FIG.1

## BACKGROUND OF THE INVENTION:

The present invention relates to a surveying method utilizing a global positioning system and also to a surveying equipment provided with a receiving means for the global positioning system used to perfrom said surveying method.

The global positioning system is well known often by the name of GPS and therefore will be referred to hereinafter simply as GPS. This GPS is a positioning system adapted to position a station on the ground by simultaneously receiving at this station information supplied from four or more GPS satellites, concerning positions, orbits, clocks or the like and so-called interferometry by which such surveying is simultaneously carried out at two or more staions allows a clock error or the like to be eliminated and thereby allows a relative position of stations on the ground to be surveyed with a high precision. Accordingly, an unknown station may be measured by the GPS interferometry with one GPS receiving means provided at a known reference station and the other GPS receiving means provided at said unknown station to use said unknown station as a known station which is defined by the present invention as the GPS traverse station. When this known station which has been positioned by the GPS is used as a reference direction station as will be described later, this known station is defined by the present invention as the GPS reference direction station.

Meanwhile, to position a new station by the existing surveying equipment such as the conventional total station, this station must be clearly sighted from the known station, at which there is provided the surveying equipment and there must be another known station as the reference direction station at another location which can be clearly sighted from the first-mentioned known station. More specifically, a distance from a known station as the reference direction station to an unknown station can be measured by sighting this unknown station by the surveying equipment such as the total station set up at said known station and an angle of the unknown station relative to the reference direction angle can be surveyed on the basis of an angle by which the sighting direction of the surveying equipment has been rotated from the reference direction station to the unknown station. A relative position of these two stations determined by such distance and angle measurements may be matched to the preceding surveying result to obtain a new known station. The traverse surveying commonly used in surveying for civil engineering, urban planning, land readjustment or the like is the technique by which a first known station being able to get a clear view of the reference direction station is used as the starting known station to measure a distance between a pair of unknown stations presenting a clear view to each other and an included angle from back sight to fore sight is measured for successively surveying a plurality of stations along a route so far as there is no sighting disturbance. Such route is usually referred to as the traverse route and these stations are usually referred to as traverse stations. Stations radially spaced from a known station are usually referred to as radial stations.

To position a new station by the existing surveying equipment such as the total station of well known art, a relative position of this new station and a known station adjacent said new station must be matched to the preceding measuring result, based on distance and angle measurements visibly made from said known station.

It is essential to the conventional GPS surveying that the respective stations should have the sky being open sufficiently for proper reception of signals coming from the satellites. In addition, in the event that various factors such as the cycle slip occourring due to signals obstructed to be received, the ionosphere and the low precision of orbit information have led to an erroneous positioning, there is no way to check the result of positioning at least in a direct manner.

On the other hand, no satisfactory surveying has been possible with the conventional surveying equipment unless a clear sight is assured among known stations such as triangulation points and a reference direction angle has been required for an angle measurement. With a disadvantageous consequence, surveying has had to rely on the clear sighting, particularly in urban districts and areas between mountains.

While the traverse surveying allows a plurality of traverse stations to be obtained along each route so far as clear sight is not obstructed, it has been difficult to discover and erroneous surveying which may occur on the way of the route and, therefore, a precision with which surveying was carried out between each pair of traverse stations has been inevitable unreliable.

## SUMMARY OF INVENTION

Accordingly, it is a principal object of the present invention to improve the conventional method and equipment, for example, total station so that unknown stations of which the clear views from a known reference station are obstructed by landforms and/or structures such as buildings may be effectively GPS positioned to obtain new GPS traverse stations or GPS reference direction stations.

In view of the object set forth above, the present invention resides in a surveying method utilizing a GPS (global positioning system) to offer an efficient surveying even in details, said surveying method comprising steps of positioning an unknown GPS traverse station by said GPS with one GPS receiving means provided at a known reference station and the other GPS receiving means provided together with a surveying equipment such as a total station at said unknown GPS traverse station, both of these stations being to be interferometrically measured utilizing said GPS; and surveying unknown stations surrounding the GPS traverse station with a target such as a prism being provided at a known reference direction station which can be clearly viewed from said surveying equipment provided at said GPS traverse station. The invention resides also in a surveying method utilizing a GPS to accommodate a detailed surveying, said surveying method comprising steps of positioning an unknown GPS reference direction station by said GPS with one GPS receiving means provided at a known reference station and the other GPS receiving means provided together with a target such as a prism at said unknown GPS reference direction station, both of these stations being to be interferometrically measured utilizing said GPS; and surveying unknown stations presenting good visibility and surrounding a surveying equipment provided at a known station which can be clearly viewed from the target set up at said GPS reference direction station. The invention further resides in a surveying method utilizing a GPS to accommodate a demand for efficient and detailed surveying, said surveying method comprising steps of positioning a GPS traverse station and a GPS reference direction station by the GPS with one GPS receiving means provided at a known reference station and the other GPS receiving means provided at said unknown GPS traverse station and GPS reference direction station both of which are to be interferometrically measured utilizing said GPS and which can be clearly sighted from each other; and surveying unknown stations presenting good visibility and surrounding a surveying equipment provided at said GPS traverse station such as a total station, with a target such as a prism being provided at said GPS reference direction station. Preferably, the relative position of the stations presenting good visibility to each other and having been interferometrically measured by the GPS is surveyed by the surveying equipment such as the total station to check the result of positioning procedure. Preferably, the relative positions of respective pairs of traverse stations which have been successively surveyed by the surveying equipment such as the total station during the traverse surveying are interferometrically positioned utilizing the GPS to check the result of surveying procedure.

With the above-mentioned surveying method of the invention utilizing the GPS, an unknown GPS traverse station or an unknown GPS reference direction station may be positioned relatively to a known GPS reference station utilizing the GPS positioning procedure with one GPS receiving means provided at a known reference station having thereabove the sky being open sufficiently for proper reception of signals supplied from the GPS satellites and the other GPS receiving means provided at an unknown station destined to be said GPS traverse station or said GPS reference direction station and, based on a result of this positioning, a plurality of unknown stations radially spaced from the GPS traverse station or the GPS reference direction station may be efficiently surveyed. The relative position of the stations presenting good visibility to each other and having been interferometrically measured by the GPS may be surveyed by the surveying equipment such as the total station to check the result of positioning procedure, on one hand, and the relative positions of respective pairs of traverse stations which have been successively surveyed by the surveying equipment such as the total station during the traverse surveying may be interferometrically positioned utilizing the GPS to check the result of the surveying procedure. In view of the object set forth above, the present invention resides also in a surveying equipment comprising one GPS receiving means provided at a known reference station and the other GPS receiving means associated with an unknown traverse station, said other GPS receiving means being incorporated in the surveying equipment such as a total station, both of these stations being to be interferometrically measured utilizing the GPS. Preferably, the GPS receiving means incorporated in the surveying equipment such as the total station comprises a GPS antenna. It is also preferable that the GPS receiving means incorporated in the surveying equipment such as the total station comprises the GPS antenna provided integrally with a receiver. Preferably, the GPS receiving means is mounted on the surveying equipment such as the total station by a disconnectable connector mechanism. Preferably, the GPS receiving means is mounted on the surveying equipment so that a mechanical or electrical centre of said GPS receiving means be positioned on a mechanically vertical axis of said surveying equipment such as the total station.

With the above-mentioned surveying equipment including the GPS receiving means of the invention, an unknown station destined to be a traverse station, which can not be clearly viewed from a known reference station but has thereabove the sky being open sufficiently for proper reception of signals coming from GPS satellites can be positioned by utilizing the GPS with one GPS receiving means provided at said known reference station having thereabove the sky being open sufficiently for proper reception of signals coming from the GPS satellites and the surveying equipment such as the total station including the other GPS receiving means provided at said unknown station. At the same time, a plurality of unknown stations radially spaced from said traverse station can be surveyed by said surveying equipment. In the manner, the positioning by the GPS can be efficiently combined with the surveying by the surveying equipment on a single station. As has been previously described, the GPS receiving means incorporated in the surveying equipment such as the total station may comprise a GPS antenna or a GPS antenna provided integrally with a receiver.

When the GPS receiving means incorporated in the surveying equipment comprises the GPS antenna along, the connector means used to mount the antenna on the surveying equipment may be simplified, on one hand, and, when the GPS receiving means comprises the antenna provided integrally with the receiver, transport and installation thereof can be facilitated.

The arrangement such that the GPS receiving means is mounted on the surveying equipment such as the total station by a disconnectable connector mechanism allows the GPS receiving means to be mounted on the surveying equipment such as the conventional total station. The arrangement such that the GPS receiving means is mounted on the surveying equipment so that a mechanical or electrical centre of said GPS receiving means be positioned on a mechanically vertical axis of said surveying equipment such as the total stataion advantageously eliminates a troublesome operation of eccentric surveying to determine a relative position of the station to be GPS positioned and the station to be surveyed by the surveying equipment.

In view of the object set forth above, the present invention resides also in a surveying target comprising one GPS receiving means provided at a known reference station and the other GPS receiving means associated with an unknown reference direction station being incorporated in the surveying target such as a prism target, both of these stations being interferometrically measured utilizing the GPS. Preferably, the GPS receiving means incorporated in the surveying target comprises a GPS antenna. It is also preferable that the GPS receiving means incorporated in the surveying target comprises a GPS antenna provided integrally with a receiver. Preferably, the GPS receiving means is mounted on the surveying target by a disconnectable connector mechanism. Preferably, the GPS receiving means is mounted on the surveying target so that a mechanical or electrical centre of said GPS receiving antenna be positioned on a mechanically vertical axis of the surveying target.

With the surveying target of the invention including the GPS receiving means, an unknown station destined to be a reference direction station, which can not be clearly viewed from a known reference station but has thereabove the sky being open sufficiently for proper reception of signals coming from GPS satellites can be GPS positioned with one GPS receiving means provided at said known reference station which has thereabove the sky being open sufficiently for proper reception of signals coming from the GPS satellites and the surveying target of the invention including the GPS receiving means as other GPS receiving means provided at said unknown station. At the same time, a plurality of unknown stations radially spaced from a known station, for example, a GPS traverse station can be surveyed by the surveying equipment such as the total station provided at said GPS traverse station by sighting said unknown stations with the surveying target provided at said reference direction station being used as the angle measurement reference. In this manner, the GPS positioning of the reference direction station can be efficiently combined with surveying by the surveying target of the reference direction station on a single station. The GPS receiving means incorporated in the surveying target may comprise a GPS antenna alone or the antenna provided integrally with a receiver. When the GPS receiving means incorporated in said surveying target comprises the GPS antenna alone, the mechanism by which the receiving means is mounted on the surveying target can be simplified, on one hand, and, when the receiving means comprises the antenna provided integrally with the receiver, transport and installation thereof can be facilitated.

The arrangement such that the GPS receiving means is mounted on the surveying target such as the prism target by the disconnectable connector mechanism allows the GPS receiving means to be easily mounted on the surveying target. The arrangement such that the GPS receiving means is mounted on the surveying target so that a mechanical or electrical centre of said GPS receiving means be positioned on a mechanical vertical axis of said surveying target advantageously eliminates a demand for troublesome operation of eccentric surveying to determine a relative position of the station positioned by the GPS and the station surveyed by the surveying target.

BRIEF DESCRIPTION OF THE DRAWINGS

Fig. 1 is a diagram illustrating by way of example the surveying method of the present invention utilizing a GPS;

Fig. 2 is a schematic front view showing an embodiment of the surveying equipment provided with a GPS receiving means of the present invention;

Fig. 3 is a view similar to Fig. 2 but showing another embodiment of the surveying equipment;

Fig. 4 is a schematic front view showing an embodiment of the surveying target provided with the GPS receiving means of the present invention; and

Fig. 5 is a view similar to Fig. 4 but showing another embodiment of the surveying target.

EMBODIMENTS

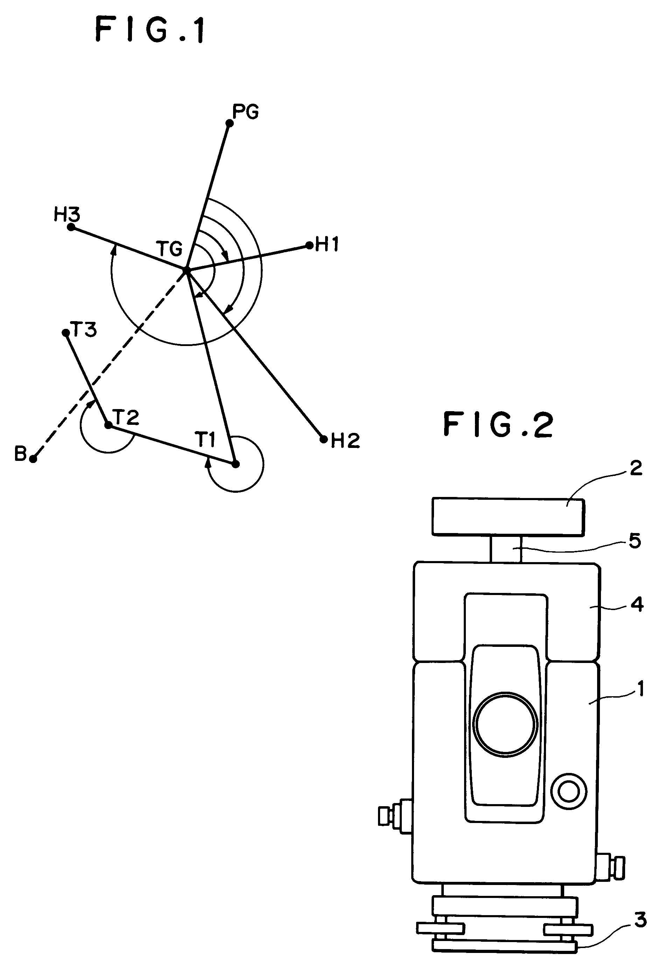

Referring to Fig. 1, reference symbol B designates a known GPS reference station such as a fixed GPS receiving means having thereabove the sky being open sufficiently for proper reception of information from GPS satellites. A coordinate representing this station is known and there is provided a GPS receiving means at this station. Reference symbol TG designates a GPS traverse station arbitrarily set up at a point having thereabove the sky being open sufficiently for proper reception of signals coming from the GPS satellites, even when it is impossible to get a clear sight of this station directly from the known reference station B, and there are provided at this station the GPS receiving means and a surveying equipment such as a total station. Reference symbol PG designates a GPS reference direction station arbitrarily set up at a point which has, similarly to said GPS traverse station TG, the sky being open sufficiently for proper reception of signals coming from the GPS satellites, even when it is impossible to get a clear sight of this station directly from the known reference station B, but which can be clearly viewed from the GPS traverse station TG. There are provided at this station PG the GPS receiving means and a surveying target such as a prism target. Reference symbols H1, H2, H3,... designate unknown radial stations set up at points which can be clearly viewed from the GPS traverse station TG and there are provided the prism targets at these radial stations, respectively.

With the above-mentioned arrangement, the unknown GPS traverse station TG and the unknown GPS reference direction station PG may be positioned with respect to the known GPS reference station B utilizing the GPS positioning procedure and, based on a result of such positioning, a plurality of unknown radial stations H1, H2, H3 around the GPS traverse station TG may be efficiently surveyed by means of the total station and the respective prism targets. Regarding said operation of positioning, if any one of the GPS traverse station TG and the GPS reference direction station PG is known, only the GPS positioning procedure required in association with the unknown station may be carried out. Referring again to Fig. 1, a traverse surveying is also possible by successively surveying the traverse stations T1, T2, T3 which can be clearly viewed from the GPS traverse station TG as a starting known station and thus a surveying plan for complicated urban structure or the like can be efficiently made and carried out by selectively utilizing the GPS positioning procedure and the surveying procedure. Furthermore, a relative position of the known stations which can be clearly veiwed from each other may be surveyed, after having been obtained by the GPS positioning procedure, by the positioning procedure with use of the surveying equipment such as the total station to determine whether the result of positioning calculation involves an error or not, on one hand, and a relative position of each paired traverse stations having been obtained by the surveying procedure with use of the surveying equipment such as the total station during the traverse surveying may be positioned by the GPS positioning procedure to check whether the relative position of these traverse stations was accurately obtained or not during the traverse surveying, on the other hand.

Now referring to Fig. 2, reference numeral 1 designates a total station proper constituting the surveying equipment of the invention, which is mounted in the conventional manner on a leveling board 3 supported by a tripod (not shown) at a station substantially in a horizontal posture. Reference numeral 4 designates a battery detachably mounted on the total station proper 1 and serving also as a handle so that a GPS receiving means 2 of the invention may be mounted on this battery 4 by a disconnectable connector 5 of well known art. In the specific embodiment shown by Fig. 2, the receiving means comprises an antenna mounted so that a mechanical or electrical centre of said antenna 2 be positioned on a mechanically vertical axis of the total station proper 1.

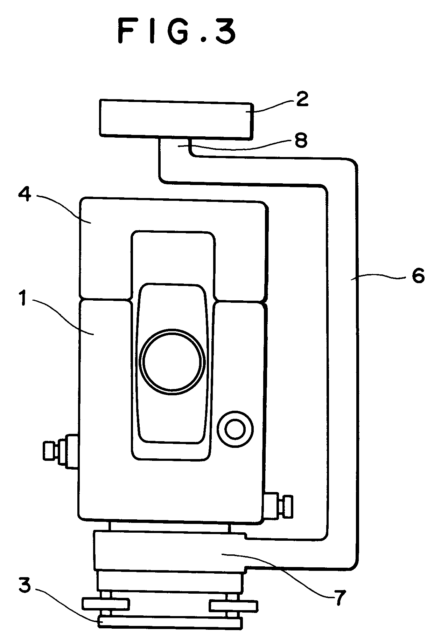

In the alternative embodiment shown by Fig. 3, a connector member 6 for the GPS receiving means of the invention has a base section 7 above the leveling board 3 and the total station 1 including the battery 4 is mounted on said base section 7. The connector member 6 extends in a curve so as to avoid a range in which the total station 1 operates and detachably carries on a top 8 thereof the GPS receiving means 2 of the invention. The receiving means 2 may comprise the antenna alone or the antenna provided integrally with a receiver and mounted so that the mechanical or electrical centre of the antenna 2 be positioned on the mechanically vertical axis of the total station proper 1.

A manner in which the surveying equipment of the invention operates will be described. Referring to Fig. 1, reference symbol TG designates a GPS traverse station arbitrarily set up at a station having thereabove the sky being open sufficiently for proper reception of signals coming from the GPS satellites, even when it is impossible to get a clear view of this station directly from the known reference station B, and there is provided the surveying equipment of the invention such as the total station including the GPS receiving means.

With the above-mentioned arrangement, the unknown GPS traverse station TG and the unknown GPS reference direction station PG may be positioned relatively to the known GPS reference station B utilizing the GPS positioning procedure and, based on a result of this positioning, a plurality of unknown radial stations around the traverse station may be efficiently surveyed by means of the total station and the respective prism targets. Regarding said operation of positioning, if any one of the GPS traverse station TG and the GPS reference direction station PG is known, said GPS positioning procedure may be utilized in association with only the unknown station. Such selection allows a surveying plan for complicated urban structure or the like to be effectively made and carried out. Furthermore, a relative position of the stations which can be clearly viewed from each other may be determined not only by the GPS positioning procedure but also by surveying procedure with use of the surveying equipment such as the total station to check whether the result of positioning calculation by the GPS involves and error or not.

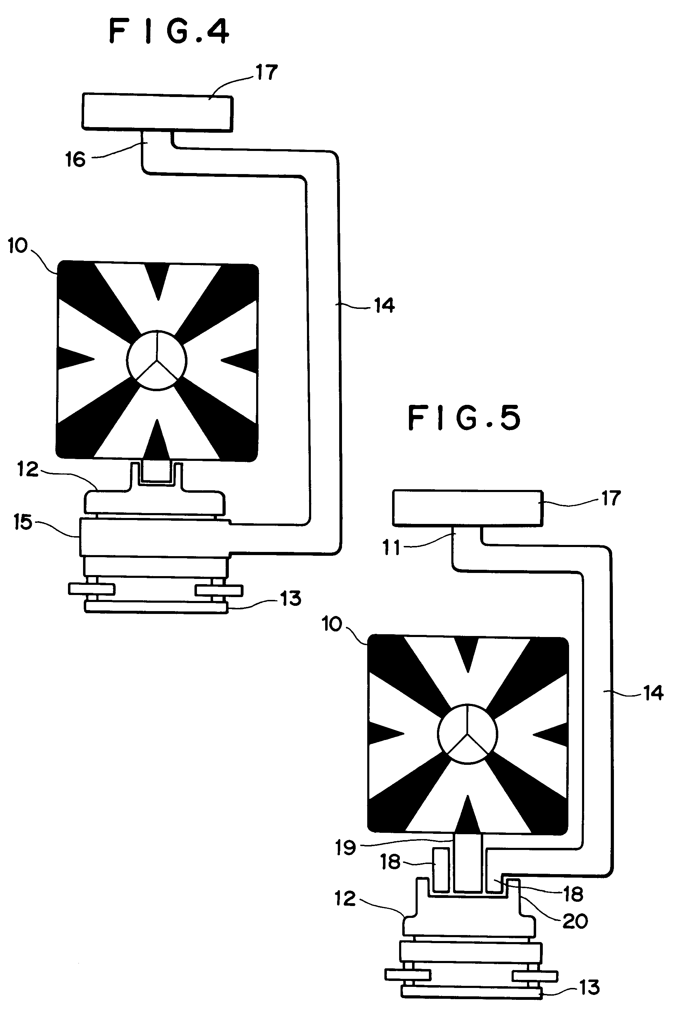

Referring to Figs. 4 and 5 respectively showing embodiments of the surveying targets, reference numeral 10 designates a prism target proper as the surveying target of the invention, which is supported by a prism pedestal 12 for rotation in a horizontal plane. The prism pedestal 12 is mounted on a leveling board 13 which is, in turn, supported by a tripod (not shown) substantially in a horizontal posture at a station.

In the embodiment shown by Fig. 4, there is provided a disconnectable connector member 14 for the GPS receiving means of the invention, with a base section 15 of said connector member 14 being positioned just above the leveling board 13. The pedestal 12 for said prism target proper 10 is mounted on said base section 15 of the connector member 14. The connector member 14 extends in a curve so as to avoid a range in which the prism target 10 operates and detachably carries on a top 16 thereof the GPS receiving means 17 of the invention by a disconnectable means of well known art.

In the embodiment shown by Fig. 5, the prism pedestal 12 supported on the leveling board 13 defines a bearing portion 20 extending upward adapted to cooperate with a lower end portion 18 of the connector member 14 for the GPS receiving means of the invention so as to form a composite bearing and thereby to surround a journal 19 of said prism target proper 10. The connector member 14 extends in a curve so as to avoid the range in which the prism target 10 operates and detachably carries on the top 11 thereof the GPS receiving means 17 of the invention.

The GPS receiving means 17 comprises the GPS receiving antenna alone or the antenna provided integrally with a receiver and mounted so that the mechanical or electrical centre of the antenna 17 be positioned on the mechanically vertical axis of the prism target proper 10.

A manner in which the surveying target of the invention operates will be described. The relative position of the GPS traverse station TG and the GPS reference direction station PG is positioned by the GPS positioning procedure and, based on the result of this positioning, a plurality of unknown radial stations H1, H2, H3 around the GPS traverse station TG can be effeciently surveyed by the total station and the respective prism targets. Regarding the GPS positioning, if the GPS traverse station TG is known, only the GPS positioning procedure associated with the unknown GPS reference direction station PG may be carried out and immediately the surveying procedure may be started utilizing the surveying prism target of the invention. Referring to Fig. 1, the traverse surveying is also possible by successively surveying the traverse stations T1, T2, T3 which can be clearly viewed from the GPS traverse station as the starting known station and thus a surveying plan for complicated urban structure or the like can be efficiently made and carried out by selectively utilizing the GPS positioning procedure and the surveying procedure with use of the surveying equipment of the invention. Furthermore, the relative position of the known stations which can be clearly viewed from each other may be surveyed, after having been obtained by the GPS positioning procedure, by the procedure with use of the surveying equipment such as the total station to determine whether the result of positioning calculation involves an error or not, on one hand, and the relative position of each paired traverse stations having been obtained by the procedure with use of the surveying equipment such as the total station during the traverse surveying may be positioned by the GPS positioning procedure to check whether the relative position of these traverse stations along a route was accurately obtained or not during the traverse surveying, on the other hand.

**Claims**

1. A surveying method utilizing a GPS (grobal positioning system), said surveying method comprising steps of positioning an unknown GPS traverse station by said GPS with one GPS receiving means provided at a known reference station and the other GPS receiving means provided together with a surveying equipment such as a total station at said unknown GPS traverse station, both of these stations being to be interferometrically measured utilizing said GPS; and surveying unknown stations surrounding the GPS traverse station with a target such as a prism being provided at a known reference direction station which can be clearly viewed from said surveying equipment provided at said GPS traverse station.

2. A surveying method utilizing a GPS, said surveying method comprising steps of positioning an unknown GPS reference direction station by said GPS with one GPS receiving means provided at a known reference station and the other GPS receiving means provided together with a target such as a prism at said unknown GPS reference direction station, both of these stations being to be interferometrically measured utilizing said GPS; and surveying unknown stations presenting good visibility and surrounding a surveying equipment such as a total station by said surveying equipment provided at a known station which can be clearly viewed from the target set up at said GPS reference direction station.

3. A surveying method utilizing a GPS, said surveying method comprising steps of positioning a GPS traverse station and a GPS reference direction station by the GPS with one GPS receiving means provided at a known reference station and the other GPS receiving means provided at said unknown GPS traverse station and GPS reference direction station both of which are to be interferometrically measured utilizing said GPS and which can be clearly viewed from each other; and surveying unknown stations presenting good visibility and surrounding a surveying equipment provided at said GPS traverse station such as a total station, with a target such as a prism being provided at said GPS reference direction station.

4. A surveying method as recited in claim 1, 2 or 3, wherein the relative position of the stations presenting good visibility to each other and having been interferometrically measured by the GPS is surveyed by the surveying equipment such as the total station to check the result of positioning procedure.

5. A surveying method as recited in claim 1, 2 or 3, wherein the relative positions of respective pairs of traverse stations which have been successively surveyed by the surveying equipment such as the total station during the traverse surveying are interferometrically positioned utilizing the GPS to check the result of surveying procedure.

6. A surveying epuipment comprising one GPS receiving means provided at a known reference station and the other GPS receiving means associated with an unknown traverse station, said other GPS receiving means being incorporated in the surveying equipment such as a total station, both of these stations being interferometrically measured utilizing the GPS.

7. A surveying equipment as recited in Claim 6, wherein the GPS receiving means incorporated in the surveying equipment such as the total station comprises a GPS antenna.

8. A surveying equipment as recited in Claim 6, wherein the GPS receiving means incorporated in the surveying equipment such as the total station comprises the GPS antenna provided integrally with a receiver.

9. A surveying equipment as recited in Claim 6, 7 or 8, wherein the GPS receiving means is mounted on the surveying equipment such as the total station by a disconnectable connector mechanism.

10. A surveying equipment as recited in Claim 6, 7, 8 or 9, wherein the GPS receiving means is mounted on the surveying equipment so that a mechanical or electrical centre of said GPS receiving means be positioned on a mechanically vertical axis of said surveying equipment such as the total station.

11. A surveying target comprising one GPS receiving means provided at a known reference station and the other GPS receiving means associated with an unknown reference direction station being incorporated in the surveying target such as a prism target, both of these stations being interferometrically measured utilizing the GPS.

12. A surveying target as recited in claim 11, wherein the GPS receiving means incorporated in the surveying target comprises a GPS antenna.

**13.** A surveying target as recited in Claim 11, wherein the GPS receiving means incorporated in the surveying target copmrises a GPS antenna provided integrally with a receiver.

**14.** A surveying target as recited in Claim 11, 12 or 13, wherein the GPS receiving means is mounted on the surveying target by a disconnectable connector mechanism.

**15.** A surveying target as recited in Claim 11, 12, 13 or 14, wherein the GPS receiving means is mounted on the surveying target so that a mechanical or electrical centre of said GPS receiving antenna be positioned on a mechanically vertical axis of the surveying target.

# FIG.1

# FIG.2

# FIG.3

# F I G.4

# F I G.5